# EUROPEAN PATENT SPECIFICATION

(11) **EP 3 696 452 B1**
(45) Date of publication and mention of the grant of the patent: **27.07.2022**
(21) Application number: 20157621.2
(22) Date of filing: 17.02.2020
(51) Int. Cl.: F16K 17/32

(54) **PRESSURE REGULATOR**
DRUCKREGLER
RÉGULATEUR DE PRESSION

(30) Priority: 15.02.2019 IT 201900002275
(43) Date of publication of application: 19.08.2020
(73) Proprietor: Cavagna Group S.p.A., 25011 Ponte San Marco di Calcinato (BS) (IT)
(72) Inventor: CAVAGNA, Savio, I-25011 PONTE SAN MARCO DI CALCINATO (BS) (IT)
(74) Representative: Locas, Davide

(56) References cited:
- WO-A1-2006/098577
- FR-A1- 2 813 945
- FR-A1- 2 984 448
- US-A- 3 424 194
- US-A1- 2015 316 166

## Description

The present invention relates to a pressure regulator of the type comprising a safety device which is suitable for operating in the event of excess pressures.

In the context of the technical sector of systems for supplying gaseous fuels, in particular liquefied petroleum gases, it is known to use pressure regulators which are capable of supplying the gas at a controlled and regulated pressure.

Typically, in fact, such gases are stored in barrels, or other similar containers, at high pressures which can vary in accordance with the level of filling of the barrel while for the applications for which they are intended, for example, a gasfired kitchen oven, it is necessary for the gas to be supplied at low pressure and that this pressure be maintained at a substantially constant value.

The pressure regulators are therefore used in such a manner as to intercept a gas supply pipe between the barrel and the gas equipment, thereby supplying thereto a gas flow at a constant flow rate and pressure.

However, there may occur in the regulators malfunctions, as a result of which there may be produced the distribution of a gas flow at an excessively high pressure or a pressure which is in any case incorrect for the intended use.

For this reason, it is known to use safety systems which interrupt the flow of gas when an excess pressure is produced.

An example of this solution is described in the French patent FR 2984448 which provides for the use of a closure member which interrupts the gas flow following a predetermined pressure being reached. Other similar solutions are described in US 2015/316166, which discloses a pressure regulator according to the preamble of claim 1,

US 3 424 194, FR 2 813 945 and WO 2006/098577.

There is further provided in such a regulator a reactivation device which is capable of bringing the closure member back into the open position after the occurrence of the interruption of the gas flow. In fact, it is evident that the excess pressure may be a result of a transient phenomenon, as occurs in the majority of cases, after all, and, once the device has been reactivated, the regulator device can return to operation in a normal manner. However, the reactivation device described in FR 2984448 has some limitations in terms of reliability and structural robustness.

In particular, it is envisaged the use of a push-button, with an axis perpendicular to the axis of the closure member, the pressure of which generates a movement of the closure member in the direction of opening of the passage. The conversion of the linear movement of the push-button into a movement of the closure member in a perpendicular direction is brought about by using a sphere which acts on an oblique surface.

However, the movement of the sphere is readily obstructed by any presence of dust or other impurities.

Furthermore, it is required a precise processing of the components and the use of material which is sufficiently rigid in order to allow correct transmission of the movement and reliability over time.

In addition, the movement of the push-button used to actuate the reactivation device can also be readily subject to problems, taking into account the fact that these regulators are often used in external environments and dusty environments, such as, for example, for the burner of a barbecue.

Therefore, the problem addressed by the present invention is to provide a pressure regulator which is structurally and functionally configured to at least partially overcome one or more of the disadvantages set out with reference to the cited prior art.

Another object is to provide a pressure regulator which is provided with a system for protection from excess pressures which is robust and reliable.

Another object of the present invention is to provide a pressure regulator which is provided with a system for protection from excess pressures which is particularly suitable for operating in dusty environments.

An object of the present invention is also to provide a pressure regulator which is provided with a system for protection from excess pressures in which there is no need to use reactivation push-buttons with linear movement.

This problem is solved and these objects are achieved by the invention by means of a pressure regulator comprising a main body inside which there is defined at least one chamber, an inlet opening for introducing into the at least one chamber gas at high pressure and an outlet opening for discharging gas at a reduced pressure, means for reducing the pressure of the gas and a safety device comprising a closure member which is capable of intercepting the inlet opening in the event of excess pressures inside the at least one chamber and a reactivation assembly which is configured to reactivate the safety device into an operating condition such that the flow of gas is again allowed inside the at least one chamber,
the reactivation assembly comprising a rotatable actuator which is configured so as to urge the closure member in an opening direction of the inlet opening following a rotation thereof about a respective rotation axis, wherein the rotatable actuator comprises a cam which is configured so as to abut the closure member following the rotation of the rotatable actuator, and wherein the cam defines a peripheral surface which includes a concave portion and a convex portion.

It will be appreciated that the pressure regulator according to the present invention comprises a safety device, which operates in the event of excess pressures by intercepting the inlet opening where applicable by means of a closure member and which can be reactivated by means of a rotatable actuator, which is capable of urging the closure member in the opening direction of the inlet opening.

In this manner, it is not necessary to use push-buttons to be pressed in order to reactivate the device, allowing the production of a mechanism with a high level of reliability.

Furthermore, the presence of any return spring which urges the push-button is not necessary, simplifying the type of action to be carried out in order to obtain the reactivation of the regulator.

According to another aspect of the invention, the closure member is configured so as to be urged in the opening direction of the inlet opening by means of movement along a respective translation axis, thereby providing an effective and reliable solution for the closure of the inlet opening in the event of excess pressures.

In preferred embodiments, the rotatable actuator comprises an operating portion which is operatively connected to the closure member so as to convert the rotation about the rotation axis of the rotatable actuator into a linear movement of the closure member along the translation axis, contributing to the reliability of the safety device which can advantageously operate so as to close the inlet opening by means of translational movement of the closure member, where applicable urged by the action of a spring.

In some embodiments, the operating portion is eccentric with respect to the rotation axis of the actuator.

In preferred embodiments, the operating portion comprises the cam which is configured so as to abut an end surface of a rod of the closure member following the rotation of the actuator. In this manner, the conversion of the movement is obtained in a simple, precise and reliable manner.

Preferably, the cam is formed at an end of the rotatable actuator, thereby contributing to making the construction of this component simpler.

According to another aspect, the operating portion is defined by the cam-type end.

Based on preferred aspects, the end surface is planar and preferably this planar surface is perpendicular to the translation axis of the closure member. It will be appreciated that this feature makes it possible to construct the closure member with a simple processing operation without requiring complex geometries.

According to the invention, the cam defines a peripheral surface which includes a concave portion and a convex portion. Preferably, the concave portion is directed towards the rotation axis of the actuator. This solution allows the position of the closure member to be reactivated, minimizing the rotational torque required on the actuator.

Preferably, the closure member is of the linear type, the rotation axis of the rotatable actuator being perpendicular to the translation axis of the closure member. This solution allows optimization of the dimensions, obtaining a particularly compact structure and simplifying the possibility of constructing the safety device and the respective reactivation assembly in a manner integrated in the regulator.

Preferred features of the invention are more generally defined by the dependent claims.

The features and advantages of the invention will be more clearly appreciated from the detailed description of a number of embodiments thereof which are illustrated, by way of nonlimiting example, with reference to the appended drawings, in which:
- Figure 1 is a lateral cross-sectional view of a pressure regulator according to the present invention;
- Figure 2 is a perspective, cross-sectional view in accordance with two planes of section, a front plane and a lateral plane, respectively, of the pressure regulator of Figure 1;
- Figure 3 is a sectioned plan view of the pressure regulator of Figure 1;
- Figure 4 is a lateral cross-sectional view of a pressure regulator according to the present invention in a second operating configuration; and
- Figure 5 is a perspective sectional view in accordance with two planes of section, a front plane and a lateral plane, respectively, of the pressure regulator in the operating configuration of Figure 4.

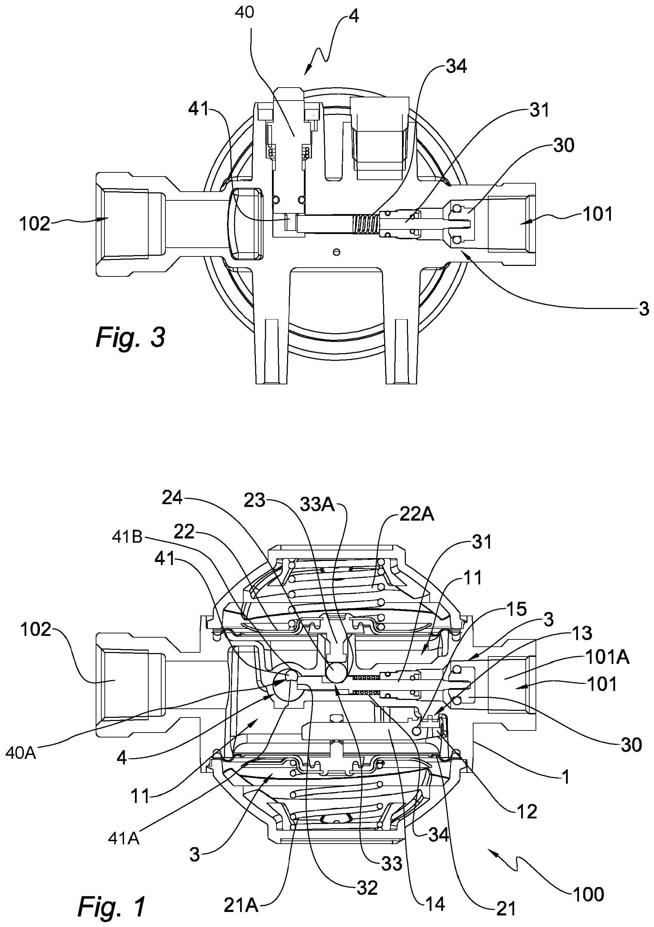

Initially with reference to Figure 1, a pressure regulator according to the present invention is generally designated 100.

The pressure regulator 100 comprises a main body 1, for example constructed by means of a metal casing.

The regulator 100 further comprises an inlet opening 101, through which there is introduced inside the regulator a gas at high pressure and an outlet opening 102, through which the gas is discharged once the regulation of pressure and flow rate has been carried out. Therefore, it will be appreciated that the inlet opening 101 is intended to be connected to a gas source at high pressure, such as, for example, a barrel, while the outlet opening 102 is intended to be connected to the burner of a gas apparatus, for example, an oven or a barbecue.

The regulation of the flow rate and of the pressure is carried out by way of gas pressure reduction means 2 which, in a preferred embodiment, are of the type with a resilient membrane.

In some embodiments, the pressure regulator 100 comprises a first membrane and a second membrane 21, 22.

According to another aspect of the invention, the membranes 21 and 22 together with the main body 1 define a chamber 11. Preferably, the membranes 21 and 22 form opposite walls of the chamber 11.

The chamber 11 is in communication with the inlet opening 101, from which it receives the gas which is intended to be subjected to the pressure reduction, and with the outlet opening 102.

Therefore, it will be appreciated that the resilient membranes 21 and 22 form an example of the pressure reduction means 2 mentioned above, acting on the gas by regulating the pressure thereof in a manner known per se.

In any case, it is evident that different solutions could be envisaged for constructing pressure reduction means 2 based, for example, on a single resilient membrane or with other pressure regulation elements.

Still with reference to Figure 1, in preferred embodiments the inlet opening 101 communicates with the chamber 11 through a passage 13 which can be selectively opened or closed by means of a closure element 12 which is operatively connected to the membrane 21. Preferably, the closure element 12 is formed by a lever 14 which pivots on a pin 15. Preferably, the lever 14 also has an opening 13A which allows a limited passage of gas, even when the lever is in a closed position on the passage 13.

An arm of the lever cooperates with the first resilient membrane 21 in such a manner that the action of a spring 21A which is connected to the resilient membrane 21 urges the closure element 12 so as to open.

The regulator of the present invention further comprises a safety device 3 which is capable of intervening in the event of a condition of excess pressure in the pressure regulator 100.

In preferred embodiments, the safety device 3 comprises a closure member 30 which is capable of intercepting the inlet opening 101 in the event of a condition of excess pressure, as will be set out in greater detail below.

Preferably, the closure member 30 is of the linear type and can move from a closure position of the inlet opening 101 to an open position thereof by means of translation along an axis Y.

In some embodiments, the axis Y coincides with the axis of an inlet pipe 101A which faces the inlet opening 101 and through which the gas is introduced into the chamber 11.

The closure member 30 further comprises a rod 31 which extends inside the chamber 11 and which is also movable along the translation axis Y.

The closure member 30 is illustrated in Figures 1 to 4 in an open position, that is to say, in a position in which the inlet opening 101 is not intercepted, and therefore in which the gas can be introduced inside the chamber 11.

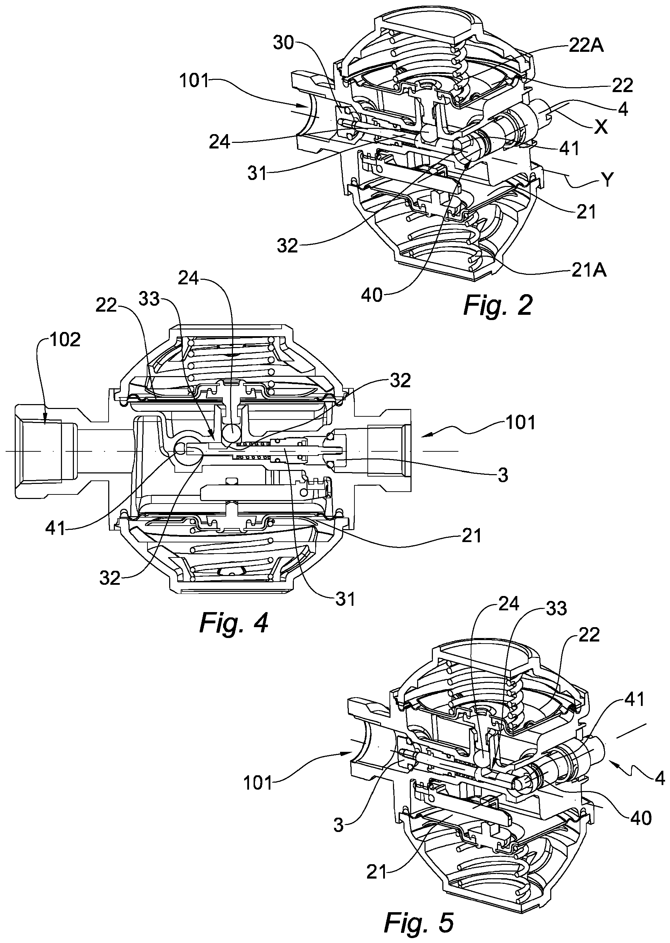

Vice versa, in Figures 5 to 7, the closure member 30 is illustrated in a closed position, that is to say, in a position in which the inlet opening 101 is instead intercepted and the flow of the gas inside the chamber 101 is prevented.

As mentioned above, the movement of the closure member 30 from the open position to the closed position is carried out automatically after the occurrence of an excess pressure inside the chamber 101. To this end, in preferred embodiments the closure member 30 is operatively connected with the pressure reduction means 2 and preferably with the second membrane 22.

In some embodiments, the rod 31 of the closure member 30 comprises a seat 33, on which a pin 23 which is connected to the second membrane 23 is engaged.

Preferably, the seat 33 has at least one inclined surface 33A, which is advantageously directed towards the closure member 30. This inclined surface 33A is orientated in such a manner that the seat 33 widens towards the outer edge thereof.

There can be interposed between the pin 23 and the seat 33 a sphere 24 which facilitates the movement of the rod 31, the sphere 24 being capable of more easily leaving the seat 33.

By means of a spring 22A or another resilient element, the second membrane 22 urges the pin 23 with the sphere 24 inside the respective seat 33, thereby preventing the axial movement of the rod 31 and, consequently, of the closure member 30.

The closure member 30 is further urged in the closure direction by means of an additional spring 34. However, the position of the seat 33 is such that, when the sphere 24 is retained inside the seat 33, the closure member 30 is retained in an open position.

Following the lifting of the membrane 22, the sphere 24, also as a result of the presence of the inclined surface 33A, can leave the seat 33, so that the closure member 30 which is urged by the spring 34 can move into a closure position, thereby intercepting the inlet opening 101 and interrupting the gas flow inside the regulator.

Therefore, it may readily be understood how, by means of an adequate calibration of the spring 22A, it is possible to cause the closure of the closure member 30 when a desired pressure is reached inside the chamber 11.

The pressure regulator 100 of the present invention further comprises a reactivation assembly 4 which is configured to reactivate the safety device 3 in an operative condition so that the gas flow is again allowed inside the chamber 11. In other words, by means of the reactivation assembly 4, the closure member 30 can be brought back into the open condition, in which the inlet opening 101 is not intercepted.

According to the invention, the reactivation assembly 4 comprises a rotatable actuator 40 which can be rotated by the user of the regulator 101 about the rotation axis X thereof, so as to urge the closure member 30 in this opening direction of the inlet opening 101 following the rotation thereof about.

To this end, the rotatable actuator 40 may comprise an operating portion 40A which is operatively connected to the closure member 30 so as to convert the rotation about the rotation axis X of the rotatable actuator 40 into a linear movement of the closure member 30 along the translation axis Y.

In some embodiments, the operating portion 40A includes a cam 41, which is preferably eccentric with respect to the axis X and which is configured so as to abut an end surface 32 of the rod 31 following the rotation of the actuator 40. Therefore, following the rotation of the actuator 40, the cam 41 will have a different position along the axis Y and, moving into contact with the end 32 of the rod 31, it will be positioned so as to consequently move it along the translation axis Y thereof.

However, the actuator 40 is free to rotate if it is not urged by external actions by the operator and, therefore, when an excess pressure situation arises, the movement of the rod 31 and closure member 30 is not prevented by the presence of the cam 41 or more generally the operating portion 40A.

Vice versa, when the closure member 30 is in a closure position, a rotation action of the actuator 40 can urge the closure member 3 so as to open, overcoming the urging action applied by the spring 34.

Discussing in detail the geometry of the reactivation assembly 4, based on preferred aspects, the end surface 32 is planar and preferably this planar surface is perpendicular to the translation axis of the closure member.

According to the invention, the cam 41 defines a peripheral surface which includes a concave portion 41A and a convex portion 41B. Preferably, the concave portion 41A is directed towards the rotation axis of the actuator. Preferably, the concave portion 41A is opposite the convex portion with respect to the rotation axis of the actuator.

In alternative examples, not forming part of the present invention, the concave portion 41A can also be formed by a planar portion, which is always preferably opposite the convex portion.

Advantageously, the convex portion 41B is configured so as to abut the end surface 32 during the reactivation operations of the regulator, preferably sliding along it during the rotation and urging the closure member to move in translation along the translation axis thereof.

The concave portion 41A instead allows definition of a receiving space for the end of the rod 31, or more generally the closure member 3, when the regulator is blocked when the following safety mechanism becomes operative. This situation is described in an embodiment of the present invention in Figure 5.

The operation of the regulator is briefly described below.

Under normal operating conditions, which are illustrated in Figures 1, 2 and 3, the gas at high pressure which is supplied, for example, from a barrel which is connected to the inlet opening 101, thereby arrives at the regulator 101 and passes through the opening 13A.

As a result of this passage, the gas can access the interior of the chamber 11.

This brings about an increase of pressure inside the chamber 11, reaching such a value that the membrane 21 is urged, consequently pressing the lever 14 into an open position, releasing the gas flow through the passage 13.

Under these conditions, there is a passage of gas towards the outlet opening 102 under regulated pressure and flow conditions.

If an excess pressure situation occurs inside the chamber 11, as a result of, for example, a malfunction of the lever 14, which prevents the pressure regulation action thereof, the safety mechanism of the present invention becomes operational.

The increase of the pressure in the chamber 11 brings about a movement of the second membrane 22 which, as illustrated above, produces movement of the pin 23 away, and the consequent closure of the inlet opening 101 by the closure member 30, as illustrated in Figures 4 and 5.

In the event of such a situation, the user can carry out a reactivation of the regulator by means of the reactivation assembly 4.

In fact, it is possible to temporarily interrupt the gas flow from the barrel, for example, by acting on a respective tap, and to rotate the actuator 40, again pressing the closure member 30 towards the open position.

In this manner, the sphere 24 is again moved inside the seat 33, bringing the regulator into the conditions of Figure 1 and 2 and thereby reactivating the normal operation thereof.

Therefore, it will be appreciated that the regulator according to the present invention allows to get a high level of safety and overcomes any temporary malfunctions in a simple and effective manner.

## Claims

1. A pressure regulator (100) comprising a main body (1) inside which there is defined at least one chamber (11, 12), an inlet opening (101) for introducing into the at least one chamber (11, 12) gas at high pressure and an outlet opening (102) for discharging gas at a reduced pressure, means for reducing the pressure of the gas (2) and a safety device (3) comprising a closure member (30) which is capable of intercepting the inlet opening (101) in the event of excess pressures inside the at least one chamber (11, 12) so as to prevent the flow of gas inside the at least one chamber (11, 12) and a reactivation assembly (4) which is configured to reactivate the safety device (3) into an operating condition such that the flow of gas is again allowed inside the at least one chamber (11, 12), wherein the reactivation assembly (4) comprises a rotatable actuator (40) which is configured so as to urge the closure member (30) in an opening direction of the inlet opening (101) following a rotation thereof about a respective rotation axis (X), wherein the rotatable actuator (40) comprises a cam (41) which is configured so as to abut the closure member (30) following the rotation of the rotatable actuator (40), **characterized in that** the cam (41) defines a peripheral surface which includes a concave portion (41A) and a convex portion (41B).

2. A pressure regulator (100) according to claim 1, wherein the closure member (30) is configured so as to be urged, by means of the rotatable actuator (40), in the opening direction of the inlet opening (101) by means of movement along a respective translation axis (Y).

3. A pressure regulator (100) according to claim 1 or claim 2, wherein the cam (41) is formed at an operating portion (40A) which is operatively connected to the closure member (30) so as to convert the rotation about the rotation axis (X) of the rotatable actuator (40) into a linear movement of the closure member (30) along the translation axis (Y).

4. A pressure regulator (100) according to any one of claims 1 to 3, wherein the cam (41) is configured so as to abut an end surface (32) of the closure member (30) following the rotation of the rotatable actuator (40).

5. A pressure regulator (100) according to claim 4, wherein the closure member (30) comprises a rod (31), the end surface (32) preferably being defined on the rod (31).

6. A pressure regulator (100) according to claim 4 or claim 5, wherein the end surface (32) is planar.

7. A pressure regulator (100) according to any one of the preceding claims, wherein the closure member (30) is of the linear type so as to define a translation axis (Y) of the closure member (30).

8. A pressure regulator (100) according to claim 7, wherein the rotation axis (X) of the rotatable actuator (40) is perpendicular to the translation axis (Y) of the closure member (30) .

9. A pressure regulator (100) according to claim 7 or claim 8, when dependent on claim 5 or claim 6, wherein the end surface (32) is substantially perpendicular to the translation axis of the closure member.

10. A pressure regulator (100) according to any one of the preceding claims, wherein the concave portion (41A) is directed towards the rotation axis of the rotatable actuator (40).

11. A pressure regulator (100) according to any one of the preceding claims, wherein the concave portion (41A) is opposite the convex portion (41B) with respect to the rotation axis of the rotatable actuator (40).

12. A pressure regulator (100) according to any one of claims 3 to 7, wherein the operating portion (40A) is eccentric with respect to the rotation axis (X) of the rotatable actuator (40).

13. A pressure regulator (100) according to any one of the preceding claims, wherein the rotatable actuator (40) comprises an end (43) which projects externally from the main body (1) so as to be able to be manipulated by a user.

14. A pressure regulator (100) according to any one of the preceding claims, wherein the closure member (30) comprises a seat (33), on which a pin (23) which is connected to a membrane (22) of the gas pressure reduction means (2) is engaged.

15. A pressure regulator (100) according to any one of the preceding claims, wherein the seat (33) has at least one inclined surface (33A).

## Patentansprüche

1. Druckregler (100) umfassend einen Hauptkörper (1), in dessen Inneren zumindest eine Kammer (11, 12), eine Einlassöffnung (101) zum Zuführen von Gas mit hohem Druck in die zumindest eine Kammer (11, 12) und eine Auslassöffnung (102) zum Abführen von Gas mit reduziertem Druck, eine Einrichtung (2) zum Reduzieren des Drucks des Gases, und eine Sicherheitsvorrichtung (3) mit einem Verschlusselement (30), das imstande ist, die Einlassöffnung (101) im Falle von Überdrücken im Inneren der zumindest einen Kammer (11, 12) zu unterbrechen, um den Gasstrom im Inneren der zumindest einen Kammer (11, 12) zu unterbinden, und eine Reaktivierungsanordnung (4) definiert ist, die zum Reaktivieren der Sicherheitsvorrichtung (3) in einen Betriebszustand konfiguriert ist, sodass der Gasstrom im Inneren der zumindest einen Kammer (11, 12) wieder zulässig ist, wobei die Reaktivierungsanordnung (4) ein drehbares Betätigungselement (40) umfasst, das zum Drücken des Verschlusselements (30) in Öffnungsrichtung der Einlassöffnung (101) nach dessen Drehung um eine entsprechende Drehachse (X) konfiguriert ist, wobei das drehbare Betätigungselement (40) einen Nocken (41) umfasst, der nach der Drehung des drehbaren Betätigungselements (40) zum Anliegen am Verschlusselement (30) konfiguriert ist, **dadurch gekennzeichnet, dass** der Nocken (41) eine Umfangsfläche definiert, die einen konkaven Abschnitt (41A) und einen konvexen Abschnitt (41B) umfasst.

2. Druckregler (100) nach Anspruch 1, wobei das Verschlusselement (30) so konfiguriert ist, dass dieses mittels des drehbaren Betätigungselements (40) durch eine Bewegung entlang einer jeweiligen Translationsachse (Y) in die Öffnungsrichtung der Einlassöffnung (101) gedrückt wird.

3. Druckregler (100) nach Anspruch 1 oder Anspruch 2, wobei der Nocken (41) an einem Betätigungsabschnitt (40A) ausgebildet ist, der mit dem Verschlusselement (30) wirkverbunden ist, um die Drehung um die Drehachse (X) des drehbaren Betätigungselements (40) in eine lineare Bewegung des Verschlusselements (30) entlang der Translationsachse (Y) umzuwandeln.

4. Druckregler (100) nach einem der Ansprüche 1 bis 3, wobei der Nocken (41) so konfiguriert ist, dass dieser nach der Drehung des drehbaren Betätigungselements (40) an einer Stirnfläche (32) des Verschlusselements (30) anliegt.

5. Druckregler (100) nach Anspruch 4, wobei das Verschlusselement (30) eine Stange (31) umfasst, wobei die Stirnfläche (32) vorzugsweise an der Stange (31) definiert ist.

6. Druckregler (100) nach Anspruch 4 oder Anspruch 5, wobei die Stirnfläche (32) eben ist.

7. Druckregler (100) nach einem der vorhergehenden Ansprüche, wobei das Verschlusselement (30) das eines linearen Typs ist, um eine Translationsachse (Y) des Verschlusselements (30) zu definieren.

8. Druckregler (100) nach Anspruch 7, wobei die Drehachse (X) des drehbaren Betätigungselements (40) senkrecht zur Translationsachse (Y) des Verschlusselements (30) verläuft.

9. Druckregler (100) nach Anspruch 7 oder 8, in Abhängigkeit von Anspruch 5 oder 6, wobei die Stirnfläche (32) im Wesentlichen senkrecht zur Translationsachse des Verschlusselements verläuft.

10. Druckregler (100) nach einem der vorhergehenden Ansprüche, wobei der konkave Abschnitt (41A) auf die Drehachse des drehbaren Betätigungselements (40) gerichtet ist.

11. Druckregler (100) nach einem der vorhergehenden Ansprüche, wobei der konkave Abschnitt (41A) dem konvexen Abschnitt (41B) in Bezug auf die Drehachse des drehbaren Betätigungselements (40) gegenüberliegt.

12. Druckregler (100) nach einem der Ansprüche 3 bis 7, wobei der Betätigungsabschnitt (40A) in Bezug auf die Drehachse (X) des drehbaren Betätigungselements (40) exzentrisch ist.

13. Druckregler (100) nach einem der vorangehenden Ansprüche, wobei das drehbare Betätigungselement (40) ein Ende (43) umfasst, das vom Hauptkörper (1) nach außen so vorragt, dass dieses durch einen Benutzer bedienbar ist.

14. Druckregler (100) nach einem der vorhergehenden Ansprüche, wobei das Verschlusselement (30) einen Sitz (33) umfasst, an dem ein Stift (23) eingreift, der mit einer Membran (22) der Gasdruckreduzierungseinrichtung (2) verbunden ist.

15. Druckregler (100) nach einem der vorhergehenden Ansprüche, wobei der Sitz (33) zumindest eine geneigte Fläche (33A) aufweist.

## Revendications

1. Régulateur de pression (100) comprenant un corps principal (1) à l'intérieur duquel il est défini au moins une chambre (11, 12), une ouverture d'entrée (101) pour introduire dans la au moins une chambre (11, 12) du gaz à haute pression et une ouverture de sortie (102) pour évacuer du gaz à une pression réduite, des moyens pour réduire la pression du gaz (2) et un dispositif de sécurité (3) comprenant un élément de fermeture (30) qui est capable d'intercepter l'ouverture d'entrée (101) en cas de pressions excessives à l'intérieur de la au moins une chambre (11, 12) afin d'empêcher l'écoulement de gaz à l'intérieur de la au moins une chambre (11, 12) et un ensemble de réactivation (4) qui est configuré pour réactiver le dispositif de sécurité (3) dans un état de fonctionnement de sorte que l'écoulement de gaz est à nouveau autorisé à l'intérieur de la au moins une chambre (11, 12), dans lequel l'ensemble de réactivation (4) comprend un organe de commande rotatif (40) qui est configuré de manière à pousser l'élément de fermeture (30) dans une direction d'ouverture de l'ouverture d'entrée (101) après une rotation de celui-ci autour d'un axe de rotation respectif (X), dans lequel l'organe de commande rotatif (40) comprend une came (41) qui est configurée de manière à buter contre l'élément de fermeture (30) après la rotation de l'organe de commande rotatif (40), **caractérisé en ce que** la came (41) définit une surface périphérique qui inclut une partie concave (41A) et une partie convexe (41B).

2. Régulateur de pression (100) selon la revendication 1, dans lequel l'élément de fermeture (30) est configuré pour être poussé, au moyen de l'organe de commande rotatif (40), dans la direction d'ouverture de l'ouverture d'entrée (101) au moyen d'un mouvement le long d'un axe de translation respectif (Y).

3. Régulateur de pression (100) selon la revendication 1 ou la revendication 2, dans lequel la came (41) est formée au niveau d'une partie active (40A) qui est fonctionnellement reliée à l'élément de fermeture (30) de manière à convertir la rotation autour de l'axe de rotation (X) de l'organe de commande rotatif (40) en un mouvement linéaire de l'élément de fermeture (30) le long de l'axe de translation (Y).

4. Régulateur de pression (100) selon l'une quelconque des revendications 1 à 3, dans lequel la came (41) est configurée de manière à buter contre une surface d'extrémité (32) de l'élément de fermeture (30) après la rotation de l'organe de commande rotatif (40).

5. Régulateur de pression (100) selon la revendication 4, dans lequel l'élément de fermeture (30) comprend une tige (31), la surface d'extrémité (32) étant de préférence définie sur la tige (31).

6. Régulateur de pression (100) selon la revendication 4 ou la revendication 5, dans lequel la surface d'extrémité (32) est plane.

7. Régulateur de pression (100) selon l'une quelconque des revendications précédentes, dans lequel l'élément de fermeture (30) est du type linéaire de manière à définir un axe de translation (Y) de l'élément de fermeture (30).

8. Régulateur de pression (100) selon la revendication 7, dans lequel l'axe de rotation (X) de l'organe de commande rotatif (40) est perpendiculaire à l'axe de translation (Y) de l'élément de fermeture (30).

9. Régulateur de pression (100) selon la revendication 7 ou la revendication 8, lorsqu'elle dépend de la revendication 5 ou de la revendication 6, dans lequel la surface d'extrémité (32) est sensiblement perpendiculaire à l'axe de translation de l'élément de fermeture.

10. Régulateur de pression (100) selon l'une quelconque des revendications précédentes, dans lequel la partie concave (41A) est dirigée vers l'axe de rotation de l'organe de commande rotatif (40).

11. Régulateur de pression (100) selon l'une quelconque des revendications précédentes, dans lequel la partie concave (41A) est opposée à la partie convexe (41B) par rapport à l'axe de rotation de l'organe de commande rotatif (40).

12. Régulateur de pression (100) selon l'une quelconque des revendications 3 à 7, dans lequel la partie active (40A) est excentrée par rapport à l'axe de rotation (X) de l'organe de commande rotatif (40).

13. Régulateur de pression (100) selon l'une quelconque des revendications précédentes, dans lequel l'organe de commande rotatif (40) comprend une extrémité (43) qui fait saillie vers l'extérieur depuis le corps principal (1) de manière à pouvoir être manipulée par un utilisateur.

14. Régulateur de pression (100) selon l'une quelconque des revendications précédentes, dans lequel l'élément de fermeture (30) comprend un siège (33), sur lequel un ergot (23) qui est relié à une membrane (22) du moyen de réduction de pression de gaz (2) est engagé.

15. Régulateur de pression (100) selon l'une quelconque des revendications précédentes, dans lequel le siège (33) a au moins une surface inclinée (33A).
